# EUROPÄISCHE PATENTSCHRIFT

(11) **EP 3 500 766 B1**
(45) Veröffentlichungstag und Bekanntmachung des Hinweises auf die Patenterteilung: **13.05.2020**
(21) Anmeldenummer: 17751092.2
(22) Anmeldetag: 10.08.2017
(51) Int. Cl.: F16C 19/06, F16C 33/58, F16C 19/54

(54) **WÄLZLAGER FÜR DIE LAGERUNG EINER ANTRIEBSSCHNECKE EINER ELEKTROMECHANISCHEN HILFSKRAFTLENKUNG EINES KRAFTFAHRZEUGS**
ROLLING BEARING FOR A WORM GEAR MOTOR IN AN ELECTROMECHANICAL VEHICLE STEERINGSYSTEM
ROULEMENT À BILLES POUR UN MOTEUR Â VIS SANS FIN DANS UN SYSTEME ELECTROMECHANIQUE DE DIRECTION ASSISTEE

(30) Priorität: 16.08.2016 DE 102016115147
(43) Veröffentlichungstag der Anmeldung: 26.06.2019
(73) Patentinhaber: thyssenkrupp Presta AG, 9492 Eschen (LI); thyssenkrupp AG, 45143 Essen (DE)
(72) Erfinder: SCHLEGEL, Ulrich, 7304 Maienfeld (CH); DONA, Michael, 6713 Ludesch (AT)
(74) Vertreter: thyssenkrupp Intellectual Property GmbH
(86) Internationale Anmeldenummer: PCT/EP2017/070278
(87) Internationale Veröffentlichungsnummer: WO 2018/033459

(56) Entgegenhaltungen:
- EP-A1- 2 450 262
- DE-A1-102014 105 921
- DE-C1- 19 854 277
- DE-U1- 9 421 787
- US-A1- 2010 175 503

## Beschreibung

Die Erfindung betrifft ein Wälzlager für die Lagerung einer Antriebsschnecke einer elektro-mechanischen Hilfskraftlenkung eines Kraftfahrzeugs, mit einem Innenring, einem Außenring und zwischen Innenring und Außenring angeordneten Wälzkörpern, die durch eine auf der radial äußeren Seite des Innenrings angeordnete rillenförmige erste Laufbahn und durch eine auf der radial inneren Seite des Außenrings angeordnete rillenförmige zweite Laufbahn geführt sind.

Ein derartiges Wälzlager ist beispielsweise aus der DE 10 2006 039 740 A1 bekannt. Bei Schneckenradgetrieben kann die Antriebsschnecke aufgrund der wirksamen Kräfte im Lastfall verkippt oder durchgebogen werden. Um Zwangszustände zu vermeiden, ist es erforderlich, eine gewisse Verkippung des Wälzlagers der Antriebsschnecke zuzulassen. Weiterhin kann ein Verkippen zum Spielausgleich genutzt werden, wobei ein solches Spiel aus dem Eingriffsverhalten des Schneckenradgetriebes auf Grund von Temperatureffekte und Verschleiß resultieren kann. Dies wird beim Stand der Technik dadurch ermöglicht, dass eine Laufbahn der Lagerringe eine spezielle Schmiegung und eine erhöhte Lagerluft aufweist, die ein Verkippen des Innenrings gegenüber dem Außenring ermöglicht. Nachteil dieser Lösung ist es, dass es zu ungünstigen Eingriffsverhältnissen zwischen Antriebsschnecke und Schneckenrad führen, da die Verkippung in viele verschiedene Richtungen ermöglicht ist.

Aus der EP 2 450 262 A1 ist ein Wälzlager der eingangs genannten Art bekannt, bei dem ebenfalls die vorangehend genannten Probleme auftreten.

Aufgabe der Erfindung ist, es ein Wälzlager der eingangs genannten Art anzugeben, das ein verbessertes Eingriffsverhalten zwischen Antriebsschnecke und Schneckenrad ermöglicht.

Gelöst wird die Aufgabe durch die Merkmale des Patentanspruchs 1. Vorteilhafte Weiterbildungen ergeben sich aus den Unteransprüchen.

Dadurch dass die zweite Laufbahn ein über ihren Umfang variierendes Querschnittsprofil aufweist, ist das Abrollen seitlich versetzter Wälzkörper und damit ein Verkippen des Innenrings um eine zur Drehachse des Wälzlagers orthogonale Kippachse ermöglicht, sofern die Kippachse in Umfangsrichtung der zweiten Laufbahn eine vorbestimmte Kippstellung einnimmt, und welches ein Verkippen des Innenrings bis auf ein Minimum verhindert, wenn die Kippachse in einem Winkel von 90° zur Kippstellung ausgerichtet ist. Auf diese Weise kann sich der Innenring in einer vorbestimmten Richtung verkippen, um ein Verkippen oder Verbiegen der Antriebsschnecke unter Last zuzulassen, ohne dass Zwangszustände auftreten. Andererseits verhindert das erfindungsgemäße Wälzlager ein Verkippen des Innenrings quer zur genannten Kipprichtung, sodass ungünstige Eingriffsverhältnisse zwischen Antriebsschnecke und Schneckenrad vermieden werden.

In einer bevorzugten Ausführungsform der Erfindung variiert das Querschnittsprofil über den Umfang der Laufbahn sinusförmig. Daraus resultiert ein maximaler Kippwinkel des Innenrings bei Ausrichtung der Kippachse in der Kippstellung und ein minimaler Kippwinkel bei Ausrichtung der Kippachse in einem Winkel von 90° zur Kippstellung. Die sinusförmige Ausgestaltung der Laufbahnvariation gewährleistet somit einen gleitenden Übergang zwischen minimal möglichem Kippwinkel und maximalem Kippwinkel.

In einer ersten Ausgestaltungsvariante der Erfindung wird das Variieren des Querschnittsprofils dadurch realisiert, dass eine seitliche Ausdehnung einer Schmiegung der zweiten Laufbahn über den Umfang variiert ist.

In einer alternativen Ausgestaltungsform der Erfindung wird das Variieren des Querschnittsprofils dadurch realisiert, dass die radiale Ausdehnung der seitlichen Flanken der zweiten Laufbahn über den Umfang variiert ist.

Die Schmiegung bestimmt sich aus dem Quotient zwischen Laufbahnradius und Kugeldurchmesser.

Bevorzugt weist die radiale Ausdehnung zwei minimale Werte und zwei maximale Werte auf, wobei die zwei minimalen Werte der Ausdehnung sich diametral gegenüberliegen und sich die zwei maximalen Werte der Ausdehnung diametral gegenüberliegen, wobei die Ausdehnung mit dem minimalen Wert um 90° in Umfangsrichtung zu der Ausdehnung mit dem maximalen Wert versetzt ist. Somit sind die Werte der radialen Ausdehnung umfangsmäßig alternierend minimal und maximal.

Bevorzugt ist der minimale Wert der Ausdehnung das 0,5- bis 0,9-fache des maximalen Wertes der Ausdehnung, besonders bevorzugt das 0,7-bis 0,8-fache.

Es ist ebenfalls denkbar und möglich, dass das Variieren des Querschnittsprofil der zweite Laufbahn dadurch realisiert, dass die radiale Ausdehnung der seitlichen Flanken der zweiten Laufbahn und die Schmiegung der zweiten Laufbahn über den Umfang variiert ist. Dadurch kann erreicht werden, dass die Vorteile der variierenden Schmiegung und der variierenden Ausdehnung der seitlichen Flanken genutzt werden können.

In einer vorteilhaften Weiterbildung kann es vorgesehen sein, dass der Wälzkörper als Kugel ausgebildet ist. Kugellager eignen sich besonders gut für die Variierung sowohl der Schmiegung als auch der radialen Ausdehnung der seitlichen Flanken der zweiten Laufbahn.

In einer weiteren vorteilhaften Weiterbildung kann es vorgesehen sein, dass der Wälzkörper in einem Käfig geführt ist. Bevorzugt umfasst das Wälzlager mehrere Wälzkörper, die durch den Käfig geführt und auf Abstand gehalten werden.

Die Ausrichtung des erfindungsgemäßen Wälzlagers beim Einbau in der gewünschten Position in Umfangsrichtung des Außenrings wird erleichtert durch die Maßnahme, dass der Außenring mit einer Markierung einer Umfangsposition versehen ist, die die Ausrichtung der Kippstellung der Kippachse anzeigt.

In Weiterbildung der genannten Ausführungsform ist vorgesehen, dass die Markierung als Vorsprung oder Rücksprung im Material des Außenrings ausgestaltet ist. Diese Maßnahme ist besonders einfach zu realisieren und die so erzeugte Markierung ist besonders dauerhaft. Es ist aber auch möglich eine Farbmarkierung am Außenring anzubringen.

Bevorzugt ist der Innenring und/oder der Außenring aus Wälzlagerstahl ausgebildet, besonders bevorzugt aus 100Cr6.

Ausführungsbeispiele der Erfindung werden nachfolgend anhand der Zeichnungen näher erläutert. Die Figuren zeigen im Einzelnen:
- Figur 1:: Ein Lenksystem eines Kraftfahrzeugs in einer schematischen dreidimensionalen Darstellung;
- Figur 2:: eine geschnittene schematisierte Darstellung eines Schneckentriebs mit einem erfindungsgemäßen Wälzlager für die Antriebsschnecke;
- Figur 3:: eine dreidimensionale Darstellung des Schneckentriebs ohne Gehäuse gemäß Figur 2;
- Figur 4:: ein erfindungsgemäßes Wälzlager in einer ersten Ausführungsform in einer perspektivischen Ansicht;
- Figur 5:: eine Explosionsdarstellung des Wälzlagers von Figur 4;
- Figur 6:: eine Draufsicht auf das Wälzlager gemäß Figur 4;
- Figur 7:: ein geschnittenes Detail gemäß Linie A - A aus Figur 6;
- Figur 8:: ein geschnittenes Detail gemäß Linie B - B von Figur 6;
- Figur 9:: ein Diagramm der Verkippung des Innenrings eines erfindungsgemäßen Wälzlagers in Abhängigkeit vom Winkel der Kippachse aus Figur 6;
- Figur 10:: eine Draufsicht auf ein erfindungsgemäßes Wälzlager in einer zweiten Ausführungsform;
- Figur 11:: das Wälzlager von Figur 10 in einer perspektivischen Darstellung;
- Figur 12:: einen Außenring des Wälzlagers von Figur 10;
- Figur 13:: ein geschnittenes Detail gemäß Linie C - C von Figur 10;
- Figur 14:: ein geschnittenes Detail gemäß Linie D - D von Figur 10.

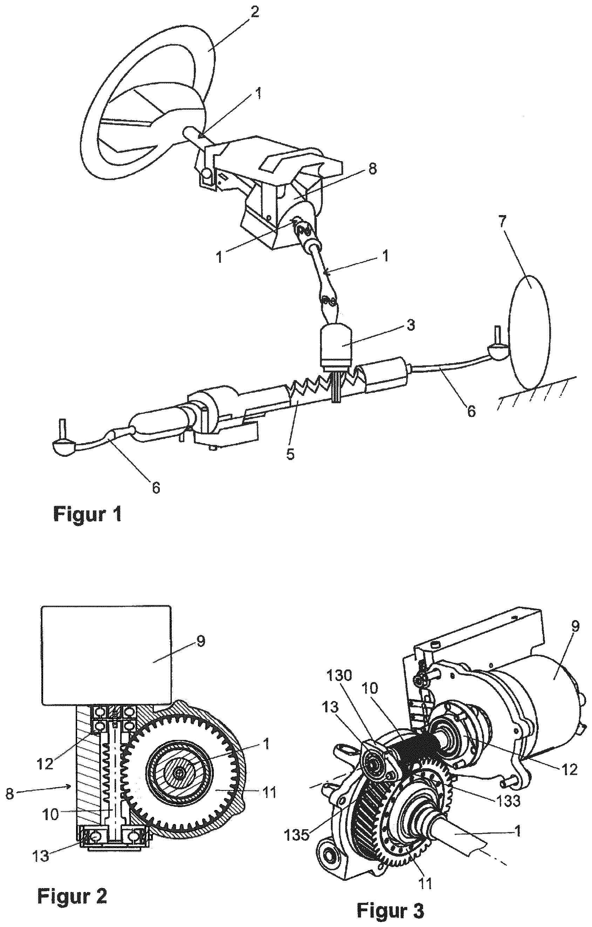

In Figur 1 erkennt man ein Lenkrad 2, welches mit einem Ende einer mehrteiligen Lenkwelle 1 befestigt ist. Die Lenkwelle 1 ist an ihrem unteren Ende mit einem Lenkgetriebe 3 verbunden. Ein Ritzel 4 des Lenkgetriebes 3 wirkt mit einer Zahnstange 5 zusammen, sodass bei einer Drehung des Lenkrads 2 eine seitliche Linearverschiebung der Zahnstange 5 resultiert, so dass die rotatorische Bewegung der Lenkwelle 1 un eine translatorische Bewegung der Zahnstange 5 überführt wird. Die Zahnstange 5 ist an beiden Enden über Spurstangen 6 mit den gelenkten Fahrzeugrädern 7 verbunden, die mittels der Spurstangen 6 verschwenkbar sind. In einem Gehäuse 8 ist eine elektro-mechanische Lenkkraftunterstützung untergebracht. Diese weist eine von einem Elektromotor 9 angetriebene Antriebsschnecke 10 auf, die mit einem Schneckenrad 11 zusammenwirkt, welches auf der Lenkwelle 1 sitzt. Die Antriebsschnecke 10 ist im Gehäuse 8 mittels zweier Kugellager 12, 13 gelagert. Das Kugellager 13 ist in einer verschwenkbaren durch ein Feder 133 vorgespannte Wippe 130 aufgenommen, wobei die Wippe 130 um eine Wippenachse 135 drehbar im Gehäuse 8 gehaltert ist. Das Kugellager 13 und die Wippe 130 lagern die Antriebsschnecke 10 auf der dem Elektromotor 9 abgewandten Seite, wobei das Kugellager 12 die Antriebsschnecke 10 auf der dem Elektromotor 9 zugewandten Seite lagern.

In einer nicht dargestellten Ausführungsform kann es ebenfalls vorgesehen sein, dass das Kugellager 13 und die Wippe 130 auf der der dem Elektromotor 9 zugewandten Seite angeordnet ist und das Kugellager 12 auf der dem Elektromotor 9 abgewandten Seite angeordnet ist.

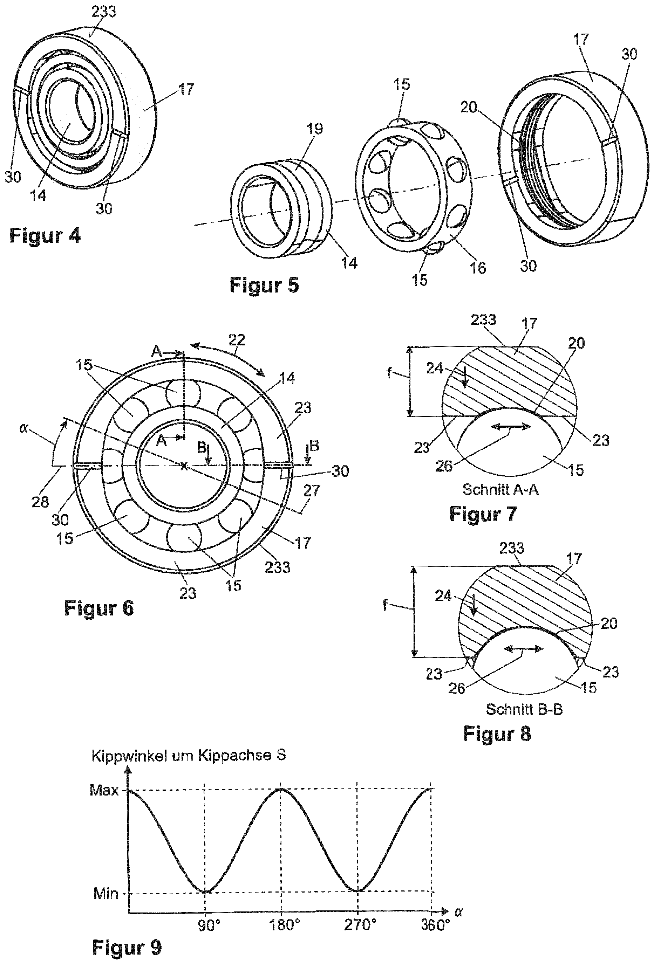

Das erfindungsgemäß ausgestaltete Kugellager 12 besteht, wie man am besten in den Figuren 4 bis 6, 10 und 11 erkennt, aus einem Innenring 14, mehreren als Kugeln ausgestalteten Wälzkörpern 15, die in einem Käfig 16 geführt werden, und einem Außenring 17, 18, in der je nach Ausführungsform verschieden ausgestaltet sein kann. Der Außenring 17, 18 ist in einer nicht dargestellten Bohrung des Gehäuses 8 der elektro-mechanischen Hilfskraftlenkung drehfest aufgenommen, während der Innenring 14 zusammen mit der Antriebsschnecke 10 drehbar ist. Auf der radial äußeren Seite des Innenrings 14 ist eine rillenförmige erste Laufbahn 19 angeordnet, in der die kugelförmigen Wälzkörper 15 abrollen bzw. abwälzen. Auf der radial inneren Seite des Außenrings 17, 18 ist eine ebenfalls rillenförmige zweite Laufbahn 20, 21 angeordnet, in der die kugelförmigen Wälzkörper 15 abrollen bzw. abwälzen. Je nach Ausführungsform des Außenrings 17, 18 haben die zweiten Laufbahnen 20, 21 eine unterschiedliche Ausgestaltung.

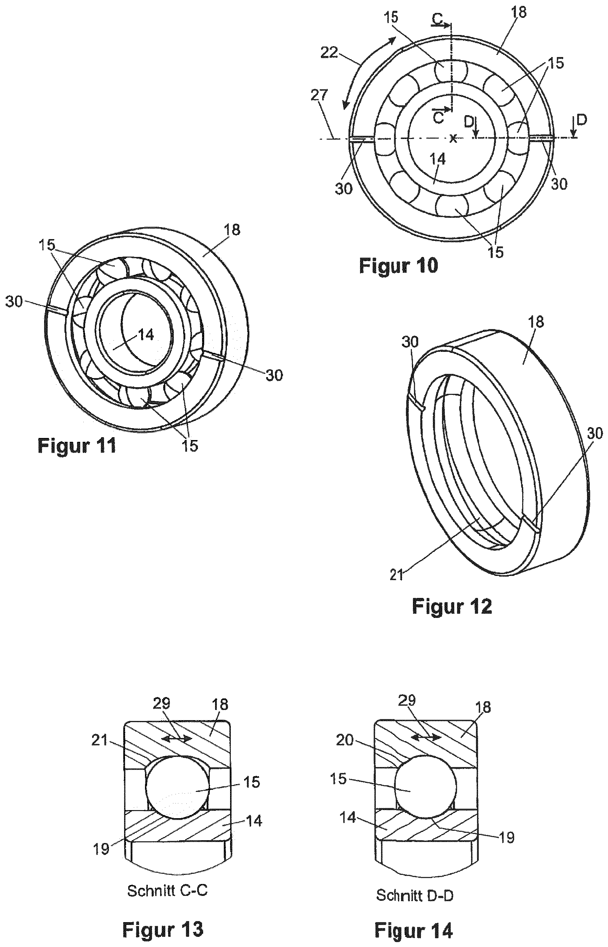

Beide Laufbahnen 20, 21 haben ein über ihren Umfang variierendes Querschnittsprofil. Die Umfangsrichtung 22 ist in den Figuren 6 und 10 durch einen Pfeil angedeutet.

Bei dem in den Figuren 4 bis 8 dargestellten Ausführungsbeispiel ist das Querschnittsprofil der zweiten Laufbahn 20 über ihren Umfang variiert, indem die Ausdehnung f ihrer seitlichen Flanken 23 in radialer Richtung 24 unterschiedlich stark ausgebildet ist, je nachdem unter welchem Winkel α der Umfangsrichtung 22 man das Querschnittsprofil betrachtet. Die Ausdehnung f ist der radiale Abstand zwischen der Aussenfläche 233 und der seitlichen Flanke 23. Wie man in Figur 7 erkennt, ist die Ausdehnung f der seitlichen Flanken 23 in radialer Richtung 24 am geringsten in zwei Umfangsbereichen, die sich in Figur 6 ganz oben und ganz unten befinden, d. h. die Ausdehnung weist einen minimalen Wert auf,. Des Weiteren erkennt man in Figur 8, dass die Ausdehnung f der seitlichen Flanken 23 in radialer Richtung am größten ist, d. h. einen maximalen Wert aufweist, wenn man die Positionen des Umfangs betrachtet, die in Figur 6 rechts und links liegen. Die minimale Ausdehnung (minimale Wert der Ausdehnung) weist einen Wert auf, der ca. 75% des maximalen Wertes der Ausdehnung entspricht. Da die kugelförmigen Wälzkörper 15 in der Umfangsposition gemäß Figur 7 durch die relativ kleinen seitlichen Flanken 23 nur schwach geführt sind, können sie in Kipprichtung 26 leicht ausgelenkt werden. In einer Umfangsposition gemäß Figur 8 hingegen werden die kugelförmigen Wälzkörper 15 durch die stark ausgebildeten seitlichen Flanken 23 besser umschlossen und können daher praktisch nicht mehr in Kipprichtung 26 seitlich verschoben werden. Dadurch wird ein Verkippen des Innenrings 14 um eine Kippachse 27 weitgehend, das heißt bis auf ein durch die Elastizität des Wälzlagermaterials und eine minimale erforderliche Lagerluft bedingtes Minimum verhindert, wenn die Kippachse 27 in einem Winkel α von 90° oder 270° zu einer in Figur 6 bezeichneten Kippstellung 28 ausgerichtet ist. Ist die Kippachse 27 hingegen in Kippstellung 28, das heißt in einem Winkel von 0° oder 180° zur Kippstellung 28 ausgerichtet, so kann der Innenring 14 maximal verkippt werden.

Den Verlauf der möglichen Verkippung um die Kippachse 27 zwischen einem Maximum und einem Minimum in Abhängigkeit von der Ausrichtung der Kippachse 27 in Umfangsrichtung 22 ausgehend von der Kippstellung 28 ist in dem Diagramm von Figur 9 dargestellt. Darin erkennt man, dass das Querschnittsprofil des Außenrings 17 in Umfangsrichtung 22 derart variiert ist, dass sich in Abhängigkeit vom Winkel α zwischen der Kippachse 27 und einer Kippstellung 28 ein sinusförmiger Verlauf des möglichen Kippwinkels zwischen einem maximalen und einem minimalen Wert ergibt.

Ein zweites Ausführungsbeispiel der Erfindung ist in den Figuren 11 bis 14 dargestellt. Dabei ist eine zweite Laufbahn 21 des Außenrings 18 so ausgestaltet, dass die seitliche Ausdehnung in der in den Figuren 13 und 14 bezeichneten Richtung 29 einer Schmiegung der zweiten Laufbahn 21 über die in Figur 10 bezeichnete Umfangsrichtung 22 variiert ist. Die Schmiegung der zweiten Laufbahn 21 ist also in der in Figur 13 gezeigten Position breiter als in der in Figur 14 gezeigten Position. Dies bedeutet, dass sich die kugelförmigen Wälzkörper 15 bei der in Figur 13 gezeigten Position, die sich in Figur 10 ganz oben und ganz unten befindet, in Richtung 29 maximal auslenkbar sind, wodurch der Innenring 14 um eine in Figur 10 waagerecht ausgerichtete Kippachse 27 maximal kippbar ist. Wird die Kippachse 27 hingegen um 90° in Umfangsrichtung 22 gedreht, so wäre der Innenring 14 nur noch um einen durch die Elastizität der Materialien des Wälzlagers 12 und einer minimalen erforderlichen Lagerluft begrenzten minimalen Winkel kippbar, weil die zweite Laufbahn 21 bei der in Figur 14 gezeigten Position keinen Spielraum für eine Verschiebung der kugelförmigen Wälzkörper 15 in Richtung 29 erlaubt.

Bezüglich des Verlaufs der Variation der seitlichen Ausdehnung der Schmiegung der zweiten Laufbahn 21 gelten die Ausführungen im Zusammenhang mit dem in den Figuren 4 bis 9 dargestellten ersten Ausführungsbeispiel entsprechend, insbesondere was den sinusförmigen Verlauf des Kippwinkels in Abhängigkeit der Orientierung der Kippachse 27 gegenüber einer Kippstellung 28 betrifft.

Bei beiden Ausführungsformen ist der jeweilige Außenring 17, 18 mit einer Markierung 30 einer Umfangsposition versehen, die die Ausrichtung der Kippachse 27 in Kippstellung 28 anzeigt. Und zwar ist die Markierung 30 an zwei Stellen angebracht, bei der die Kippachse 27 mit der Kippstellung 28 einen Winkel α von 0° beziehungsweise 180° einschließt. Die Markierungen 30 sind als Rücksprung im Material des Außenrings 17, 18 ausgestaltet, können aber auch als Vorsprung oder als Farbmarkierung ausgeführt sein.

Mit Hilfe der Markierungen 30 ist es möglich, beim Zusammenbau der Vorrichtung die Orientierung des Wälzlagers 12 so auszurichten, dass sich die Antriebsschnecke 10 in Richtung auf das Schneckenrad 11 und von diesem weg (d.h. radial zur Drehachse des Schneckenrads 11) verkippen oder verbiegen kann, während ein Verkippen oder Verbiegen quer dazu (d.h. axial zur Drehachse des Schneckenrads 11) verhindert wird. Das so orientierte erfindungsgemäße Wälzlager 12 ermöglicht also ein Verkippen des Innenrings 14 um eine definierte Kippachse 27, um ein Verkippen der Antriebsschnecke 10 unter starker Last zu ermöglichen, verhindert aber ein Verkippen um eine quer zur Kippstellung 28 ausgerichtete Kippachse 27.

### BEZUGSZEICHENLISTE

- 1: Lenkwelle
- 2: Lenkrad
- 3: Lenkgetriebe
- 4: Zahnrad
- 5: Zahnstange
- 6: Spurstange
- 7: Fahrzeugrad
- 8: Gehäuse
- 9: Elektromotor
- 10: Antriebsschnecke
- 11: Schneckenrad
- 12: Kugellager/Wälzlager
- 13: Kugellager
- 14: Innenring
- 15: Wälzkörper
- 16: Käfig
- 17: Außenring
- 18: Außenring
- 19: erste Laufbahn
- 20: zweite Laufbahn
- 21: zweite Laufbahn
- 22: Umfangsrichtung
- 23: seitliche Flanken
- 24: radiale Richtung
- 25: Winkel
- 26: Kipprichtung
- 27: Kippachse
- 28: Kippstellung
- 29: Richtung
- 30: Markierung

## Patentansprüche

1. Wälzlager für die Lagerung einer Antriebsschnecke (10) einer elektro-mechanischen Hilfskraftlenkung eines Kraftfahrzeugs, mit einem Innenring (14), einem Außenring (17, 18) und zwischen Innenring (14) und Außenring (17, 18) angeordneten Wälzkörpern (15), die durch eine auf der radial äußeren Seite des Innenrings (14) angeordnete rillenförmige erste Laufbahn (19) und durch eine auf der radial inneren Seite des Außenrings (17, 18) angeordnete rillenförmige zweite Laufbahn (20, 21) geführt sind, **dadurch gekennzeichnet, dass** die zweite Laufbahn (20, 21) ein über ihren Umfang (22) variierendes Querschnittsprofil aufweist.

2. Wälzlager nach Anspruch 1, **dadurch gekennzeichnet, dass** das Querschnittsprofil über den Umfang (22) der zweiten Laufbahn (20, 21) sinusförmig variiert.

3. Wälzlager nach Anspruch 1 oder 2, **dadurch gekennzeichnet, dass** eine seitliche Ausdehnung (29) einer Schmiegung der zweiten Laufbahn (21) über den Umfang (22) variiert ist.

4. Wälzlager nach Anspruch 1 oder 2, **dadurch gekennzeichnet, dass** die radiale Ausdehnung (24) der seitlichen Flanken (23) der zweiten Laufbahn (20) über den Umfang (22) variiert ist.

5. Wälzlager nach einem der vorhergehenden Ansprüche, **dadurch gekennzeichnet, dass** der Wälzkörper (15) als Kugel ausgebildet ist.

6. Wälzlager nach einem der vorhergehenden Ansprüche, **dadurch gekennzeichnet, dass** der Wälzkörper (15) in einem Käfig (16) geführt ist.

7. Wälzlager nach einem der vorhergehenden Ansprüche, **dadurch gekennzeichnet, dass** der Außenring (17, 18) mit einer Markierung (30) einer Umfangsposition (28) versehen ist, die die Ausrichtung der Kippstellung (28) der Kippachse (27) anzeigt.

8. Wälzlager nach Anspruch 7, **dadurch gekennzeichnet, dass** die Markierung (30) als Vorsprung oder Rücksprung im Material des Außenrings (17, 18) ausgestaltet ist.

## Claims

1. Rolling bearing for mounting a driving worm (10) of an electromechanical power-assisted steering system of a motor vehicle, having an inner ring (14), an outer ring (17, 18), and rolling elements (15) which are arranged between the inner ring (14) and outer ring (17, 18) and are guided by a channel-shaped first raceway (19) arranged on the radially outer side of the inner ring (14) and by a channel-shaped second raceway (20, 21) arranged on the radially inner side of the outer ring (17, 18), **characterized in that** the second raceway (20, 21) comprises a cross-sectional profile that varies around its circumference (22).

2. Rolling bearing according to Claim 1, **characterized in that** the cross-sectional profile varies sinusoidally around the circumference (22) of the second raceway (20, 21).

3. Rolling bearing according to Claim 1 or 2, **characterized in that** a lateral extent (29) of an osculation of the second raceway (21) is varied around the circumference (22).

4. Rolling bearing according to Claim 1 or 2, **characterized in that** the radial extent (24) of the lateral flanks (23) of the second raceway (20) is varied around the circumference (22).

5. Rolling bearing according to one of the preceding claims, **characterized in that** the rolling element (15) is in the form of a ball.

6. Rolling bearing according to one of the preceding claims, **characterized in that** the rolling element (15) is guided in a cage (16).

7. Rolling bearing according to one of the preceding claims, **characterized in that** the outer ring (17, 18) is provided with a marking (30) of a circumferential position (28), which indicates the orientation of the tilted position (28) of the tilting axis (27).

8. Rolling bearing according to Claim 7, **characterized in that** the marking (30) is configured as a protrusion or indentation in the material of the outer ring (17, 18).

## Revendications

1. Palier à roulement pour le support sur palier d'une vis sans fin d'entraînement (10) d'une direction assistée électromécanique d'un véhicule automobile, comprenant une bague intérieure (14), une bague extérieure (17, 18) et des corps de roulement (15) disposés entre la bague intérieure (14) et la bague extérieure (17, 18), qui sont guidés par un premier chemin de roulement en forme de rainure (19) disposé sur le côté radialement extérieur de la bague intérieure (14) et par un deuxième chemin de roulement (20, 21) en forme de rainure disposé sur le côté radialement intérieur de la bague extérieure (17, 18), **caractérisé en ce que** le deuxième chemin de roulement (20, 21) présente un profil en section transversale variant sur sa périphérie (22).

2. Palier à roulement selon la revendication 1, **caractérisé en ce que** le profil en section transversale varie en forme sinusoïdale sur la périphérie (22) du deuxième chemin de roulement (20, 21).

3. Palier à roulement selon la revendication 1 ou 2, **caractérisé en ce qu'**une étendue latérale (29) d'une osculation du deuxième chemin de roulement (21) varie sur la périphérie (22).

4. Palier à roulement selon la revendication 1 ou 2, **caractérisé en ce que** l'étendue radiale (24) des flancs latéraux (23) du deuxième chemin de roulement (20) varie sur la périphérie (22).

5. Palier à roulement selon l'une quelconque des revendications précédentes, **caractérisé en ce que** le corps de roulement (15) est réalisé sous forme de bille.

6. Palier à roulement selon l'une quelconque des revendications précédentes, **caractérisé en ce que** le corps de roulement (15) est guidé dans une cage (16) .

7. Palier à roulement selon l'une quelconque des revendications précédentes, **caractérisé en ce que** la bague extérieure (17, 18) est pourvue d'un marquage (30) d'une position périphérique (28) qui indique l'orientation de la position de basculement (28) de l'axe de basculement (27).

8. Palier à roulement selon la revendication 7, **caractérisé en ce que** le marquage (30) est configuré sous forme de saillie ou de retrait dans le matériau de la bague extérieure (17, 18).
